(19) Europäisches Patentamt
European Patent Office
Office européen des brevets

(11) **EP 3 221 841 B1**

(12) **FASCICULE DE BREVET EUROPEEN**

(45) Date de publication et mention de la délivrance du brevet:
**29.08.2018 Bulletin 2018/35**

(21) Numéro de dépôt: **15798392.5**

(22) Date de dépôt: **18.11.2015**

(51) Int Cl.:
*G06T 5/00* ^(2006.01)

(86) Numéro de dépôt international:
**PCT/EP2015/076964**

(87) Numéro de publication internationale:
**WO 2016/079179 (26.05.2016 Gazette 2016/21)**

(54) **PROCEDE ET DISPOSITIF DE FILTRAGE ADAPTATIF TEMPS REEL D'IMAGES DE DISPARITE OU DE PROFONDEUR BRUITEES**

VERFAHREN UND VORRICHTUNG ZUR ECHTZEITADAPTIVEN FILTRIERUNG VON VERRAUSCHTEN TIEFEN- ODER DISPARITÄTSBILDERN

METHOD AND DEVICE FOR THE REAL-TIME ADAPTIVE FILTERING OF NOISY DEPTH OR DISPARITY IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.11.2014 FR 1461260**

(43) Date de publication de la demande:
**27.09.2017 Bulletin 2017/39**

(73) Titulaire: **Commissariat à l'Énergie Atomique et aux Énergies Alternatives 75015 Paris (FR)**

(72) Inventeur: **CHAOUCH, Mohamed F-94110 Arcueil (FR)**

(74) Mandataire: **Lopez, Frédérique Marks & Clerk France Immeuble Visium 22 Avenue Aristide Briand 94117 Arcueil Cedex (FR)**

(56) Documents cités:
**US-A1- 2012 263 353**

• **WANG JIAN ET AL: "Variable Window for Outlier Detection and Impulsive Noise Recognition in Range Images", 2014 14TH IEEE/ACM INTERNATIONAL SYMPOSIUM ON CLUSTER, CLOUD AND GRID COMPUTING, IEEE, 26 mai 2014 (2014-05-26), pages 857-864, XP032614443, DOI: 10.1109/CCGRID.2014.49**
• **JAESIK PARK ET AL: "High quality depth map upsampling for 3D-TOF cameras", COMPUTER VISION (ICCV), 2011 IEEE INTERNATIONAL CONFERENCE ON, IEEE, 6 novembre 2011 (2011-11-06), pages 1623-1630, XP032101376, DOI: 10.1109/ICCV.2011.6126423 ISBN: 978-1-4577-1101-5**
• **T Weyrich ET AL: "Post-processing of Scanned 3D Surface Data", Eurographics Symposium on Point-Based Graphics, 1 janvier 2004 (2004-01-01), XP055088637, DOI: 10.2312/SPBG/SPBG04/085-094 Extrait de l'Internet: URL:http://dx.doi.org/10.2312/SPBG/SPBG04/085-094 [extrait le 2013-11-15]**

**Description**

**Domaine de l'invention**

L'invention concerne le domaine du traitement d'image et de la vision par ordinateur et en particulier le traitement d'images de disparité ou de profondeur bruitées.

**Etat de la Technique**

L'analyse de scène dans les images (comme la segmentation d'image, la soustraction du fond, la reconnaissance automatique d'objets, la détection multi-classe) est un domaine largement exploré dans la littérature, essentiellement pour les images « mono-capteur » (2D). Profitant des avancées plus récentes en perception 3D, l'analyse de scène tente également de tirer parti de l'information de profondeur puisqu'un objet est non seulement une unité visuelle cohérente en termes de couleur et/ou de texture, mais est également une unité spatialement compacte.

On distingue plusieurs systèmes de perception 3D :

- Les équipements de type scanner 3D ou caméras à temps de vol (TOF ou Time of Flight selon l'anglicisme connu). Ce type de capteurs 3D fournit une image de profondeur où chaque pixel correspond à la distance entre un point de la scène et un point spécifique. Les images de profondeur obtenues sont généralement assez précises, mais elles comportent néanmoins des aberrations (par exemple, du « speckle » pour les TOF). Leur coût est élevé, de un à plusieurs milliers d'euros, limitant leur utilisation aux applications peu contraintes en coût. De plus, nombre de ces capteurs 3D sont inutilisables dans des applications temps-réels du fait de la faible fréquence des images.

- Les systèmes stéréoscopiques, composés généralement d'un ensemble de caméras et/ou de projecteurs, associés à des traitements spécifiques (comme un calcul de disparité). L'avantage est un coût bien moindre de part le prix des caméras standards, voire les caméras pouvant déjà parfois être présentes pour d'autres applications (par exemple la fonction caméra de recul). En revanche, ces images sont davantage bruitées (sensibilité aux conditions d'éclairage, problème avec les surfaces peu texturées..), et l'image de profondeur déduite de la carte de disparité est non dense. La transformation non linéaire {carte de disparité → carte de profondeur} présente une densité d'information non uniforme dans la carte de profondeur. Typiquement, les données proches de la caméra seront plus denses, et les données à la frontière d'objets pourront être imprécises.

La qualité de l'image de profondeur ou de l'image de disparité a un impact important sur les performances des traitements réalisés sur cette image. Dans le cas des images stéréoscopiques, les erreurs importantes sur l'image de profondeur pénalisent d'autant plus les traitements réalisés.

Ainsi, les systèmes d'analyse 3D de scène (par exemple, la segmentation de la scène) sont soit coûteux, soit dégradés par les erreurs présentes dans la carte de profondeur.

Un filtrage des données liées à la profondeur peut être réalisé sur la carte de disparité. Les erreurs aberrantes sont classiquement traitées par des filtres de type médian. Le seul paramètre de ce filtre est la taille (voir la forme) du support. Des supports carrés de type 3*3 ou 5*5 sont typiquement utilisés.

Si l'aptitude à ôter le bruit croît avec la taille du support, cela s'accompagne néanmoins de la suppression de détails, ainsi que du déplacement potentiel des contours en présence de bruit. Dans le cadre d'une segmentation, cela peut engendrer une segmentation imprécise, et il est à noter que cet impact n'est pas uniforme sur l'image de profondeur ou sur l'image de disparité.

A contrario, utiliser un support de faible taille diminue l'aptitude de filtrage. Si le bruit est statistiquement important, son filtrage ne sera que partiel.

Ainsi, le choix de la taille du filtre gère le compromis entre la suppression des aberrations et la déformation de l'image. Ce choix est laissé à l'appréciation de l'utilisateur, et il n'existe pas de méthode pour la détermination automatique d'une valeur « optimale ».

Dans l'article intitulé « Rapid 3D object detection and modeling using range data from range imaging camera for heavy equipment opération » de Son, Kim & Choi paru dans la revue « Automation in Construction » Vol. 19, pp 898-906, Elsevier, 2010, les auteurs présentent un système de segmentation de scène 3D, composé d'une caméra temps de vol et d'un traitement logiciel comportant des étapes successives de réduction de bruit dans les images de profondeur, de soustraction des éléments du sol, de segmentation des objets et de création de volumes englobant des objets. Les limites d'une telle approche sont que le système nécessite une caméra à temps de vol qui est un dispositif onéreux, et les opérations de filtrage sont adaptées au type de bruit lié au capteur. Le filtrage utilise des supports fixes, sans considérer les caractéristiques locales du signal : filtre de différence moyenne (ADV) de taille 3*3 associé à un seuil fixe de 0.6 pour filtrer les valeurs aberrantes de type « dropout » (onde non reçue sur le capteur), ainsi qu'un filtre médian 3*3 pour corriger le bruit de speckle. Par ailleurs, comme mentionné précédemment, une taille fixe de support et un seuil fixe ne permettent pas de d'optimiser le compromis filtrage / préservation du signal en fonction des caractéristiques réelles et locales du signal, notamment celles liées à la géométrie d'une approche 3D. Enfin, l'approche globale de la segmentation utilise un maillage 3D dense permettant une segmentation fine, mais dont le temps de calcul, de l'ordre de la seconde, reste long.

Dans la demande de brevet EP 2541496 (A2) « Procédé, support et appareil pour filtrer le bruit de profondeur utilisant les informations de profondeur » de Samsung Electronics, une méthode de filtrage d'un bruit de profondeur peut effectuer un filtrage spatial ou temporel selon l'information de profondeur. Afin d'effectuer le filtrage spatial, la méthode peut déterminer une caractéristique du filtre spatial sur la base des informations de profondeur. De même, afin d'effectuer le filtrage temporel, la méthode peut déterminer un certain nombre de trames de référence sur la base des informations de profondeur. Bien que cette solution adapte la taille et le coefficient du filtre à appliquer en fonction de la profondeur de la région à traiter, il demeure des inconvénients qui entre autres sont que les caractéristiques du filtre ne prennent pas en compte l'éloignement des objets au centre optique de la caméra.

Dans la demande de brevet WO 2013079602 (A1) « Lissage de carte de disparité spatio-temporelle par filtrage multilatéral conjoint » de Kauff P. et al. une structure de filtre destinée au filtrage d'une carte de disparité D(p, t0) comprend un premier filtre, un deuxième filtre et un sélecteur de filtre. Le premier filtre est destiné au filtrage d'une section considérée de la carte de disparité en fonction d'une première mesure de tendance centrale. Le deuxième filtre est destiné au filtrage de la section considérée des cartes de disparité en fonction d'une deuxième mesure de tendance centrale. Le sélecteur de filtre est prévu pour la sélection du premier filtre ou du deuxième filtre pour filtrer la section considérée de la carte de disparité, la sélection étant basée sur au moins une propriété locale de la section considérée. Cette approche qui opère juste sur la carte de disparité est dépendante du choix d'un seuil fixe pour le filtre de discrimination qui n'est pas cohérent avec la réalité physique ou géométrique.

Le brevet US 2012/0263353 décrit une méthode adaptative de débruitage d'image d'une image de profondeur.

Ainsi, il n'existe pas dans l'art antérieur de solution qui permette d'améliorer la qualité d'une image de profondeur, et de manière conséquente celle des traitements ultérieurs, tout en maintenant un coût système faible.

Par ailleurs, il n'existe pas d'approche connue qui prenne en compte la réalité géométrique des opérations réalisées sur le signal lumineux originel.

Il existe alors le besoin d'une solution qui palie aux inconvénients des approches connues. La présente invention répond à ce besoin.

**Résumé de l'invention**

Un objet de la présente invention est de proposer un dispositif et un procédé pour filtrer les aberrations des images de disparité ou de profondeur par une approche adaptative.

L'approche proposée permet de filtrer de façon locale les points qui ne présentent pas une cohérence spatiale dans leur voisinage 3D, selon un critère dérivé d'une réalité géométrique des transformations réalisées sur les signaux lumineux.

Le filtrage adaptatif de la présente invention améliore les méthodes existantes, en stabilisant sur l'ensemble de l'espace 3D, le compromis capacité de filtrage / préservations des détails, compromis qui est ajusté à une valeur spécifiable par l'utilisateur.

Le procédé proposé de filtrage du bruit réalisé sur une image dense de profondeur ou sur une image dense de disparité, permet d'améliorer la qualité et les performances de traitements ultérieurs tels que la segmentation automatique d'une scène observée, c'est-à-dire la décomposition automatique de la scène en plusieurs éléments constitutifs.

Le dispositif de l'invention peut s'inscrire dans une chaine de traitement soit comme un post-traitement d'images de profondeur bruitées ou d'images de disparité bruitées, et / ou comme un prétraitement pour des applications d'analyse de scène utilisant une image de profondeur ou une image de disparité.

Avantageusement, la solution proposée se caractérise par :

- un filtrage adapté des données 3D, prenant en compte la cohérence spatiale des données et la réalité géométrique des opérations réalisées sur le signal originel (les ondes lumineuses) ;
- un coût maîtrisé du système, via l'utilisation d'un capteur stéréoscopique ;
- une approche requérant de faibles ressources de calcul et permettant un déploiement temps réel sur des architectures de calcul standard et bon marché.

Avantageusement, les paramètres de filtrage sont optimisés localement, prenant en considération les réalités géométriques des transformations du signal lumineux.

Ainsi, le compromis capacité de filtrage versus la préservation de détails est géré automatiquement, s'adaptant aux localités spatiales (uniformisation spatiale), et ne dépendant que d'un paramètre intuitif laissé au choix de l'utilisateur et valable sur toute la zone 3D considérée.

Avantageusement, les caractéristiques du filtre de la présente invention ne dépendent pas seulement de la profondeur mais également de l'éloignement des objets au centre optique de la caméra.

De façon plus générale, les adaptations des paramètres du filtre ne sont pas basées sur des équations empiriques (en l'occurrence linéaires) mais sont basées sur les réalités de transformations géométriques. Les paramètres du filtre sont également dynamiquement dépendants d'un critère de cohérence spatiale des données.

Avantageusement, le filtre n'est pas appliqué directement sur les données pour sortir une image filtrée, mais le procédé proposé permet de produire une image des pixels qui doivent êtres filtrés qui sont ensuite traités séparément. Ainsi, les pixels considérés comme valides ne sont pas du tout modifiés.

La présente invention trouvera avantage dans toute application temps réel visant à analyser tout ou partie d'une scène 3D et utilisant en entrée une image de disparité ou une image de profondeur.

Tous les acteurs impliqués en vidéo-surveillance, vidéo-protection ou vidéo-assistance, et ceux dont l'application implique un retour d'information sur le contenu d'une scène trouveront avantage au procédé de l'invention.

Pour obtenir les résultats recherchés, un procédé et un dispositif sont proposés.

En particulier, un procédé pour filtrer une image 3D initiale est décrit dans la revendication 1.

Avantageusement, la zone d'analyse locale - S(P(u,v)) - consiste en un volume 3D de taille fixe, centré sur les coordonnées P(u, v) d'un point 3D associé à un pixel.

Dans un mode de réalisation, l'étape de mesurer une valeur de cohérence spatiale - Cs(u,v) - pour un point 3D, comprend les étapes de déterminer l'ensemble des pixels de l'image initiale dont les points 3D associés sont contenus dans la zone d'analyse locale pour ledit point 3D ; et définir une valeur de cohérence spatiale pour ledit point 3D en fonction du résultat.

Dans un mode de réalisation, l'étape de mesurer une valeur de réalité géométrique - Rg(u,v) - pour un pixel associé à un point 3D, comprend les étapes de projeter la zone d'analyse locale dans une scène vide ; déterminer l'ensemble des points 3D visibles dans la zone d'analyse locale de la scène vide ; et définir une valeur de réalité géométrique pour ledit pixel en fonction du résultat.

Dans un mode de réalisation, l'étape de générer une image binaire, comprend les étapes de générer pour chaque point 3D une valeur de filtrage à partir des valeurs de cohérence spatiale et de réalité géométrique ; comparer la valeur de filtrage obtenue à une valeur seuil ; classer le point 3D en un point de scène ou en un point bruit selon le résultat de la comparaison ; et générer une image de l'ensemble des points de scène et de bruit.

Dans un mode de réalisation, l'image initiale est une image de disparité. Dans une variante d'implémentation, l'image initiale est une image de profondeur.

Selon les modes de réalisation, la zone d'analyse locale est choisie dans un groupe comprenant des représentations de type sphère, cube, boîte, cylindre ou des représentations surfaciques de type maillage 3D ou des représentations voxeliques de type voxel ou des représentations algébriques.

Dans un mode de réalisation, la valeur de réalité géométrique est pré-calculée.

L'invention couvre aussi un dispositif pour filtrer une image initiale bruitée qui comprend des moyens pour mettre en oeuvre les étapes du procédé revendiqué.

L'invention peut opérer sous la forme d'un produit programme d'ordinateur qui comprend des instructions de code permettant d'effectuer les étapes du procédé revendiqué lorsque le programme est exécuté sur un ordinateur.

## Description des figures

Différents aspects et avantages de l'invention vont apparaitre en appui de la description d'un mode préféré d'implémentation de l'invention mais non limitatif, avec référence aux figures ci-dessous :

La figure 1 illustre les étapes du procédé pour obtenir une image débruitée selon un mode de réalisation de l'invention;

La figure 2 illustre les étapes du procédé pour obtenir une image de cohérence spatiale selon un mode de réalisation de l'invention;

La figure 3 illustre les étapes du procédé pour obtenir une image de réalité géométrique selon un mode de réalisation de l'invention;

La figure 4 illustre les étapes du procédé pour obtenir une image de décision selon un mode de réalisation de l'invention;

La figure 5 illustre les blocs fonctionnels du dispositif de filtrage de l'invention selon un mode de réalisation;

La figure 6 illustre une projection de six supports locaux dans un mode de réalisation de l'invention;

Les figures 7a à 7f illustrent les images obtenues aux différentes étapes du procédé de filtrage de la figure 1 selon un mode de réalisation de l'invention.

**Description détaillée de l'invention**

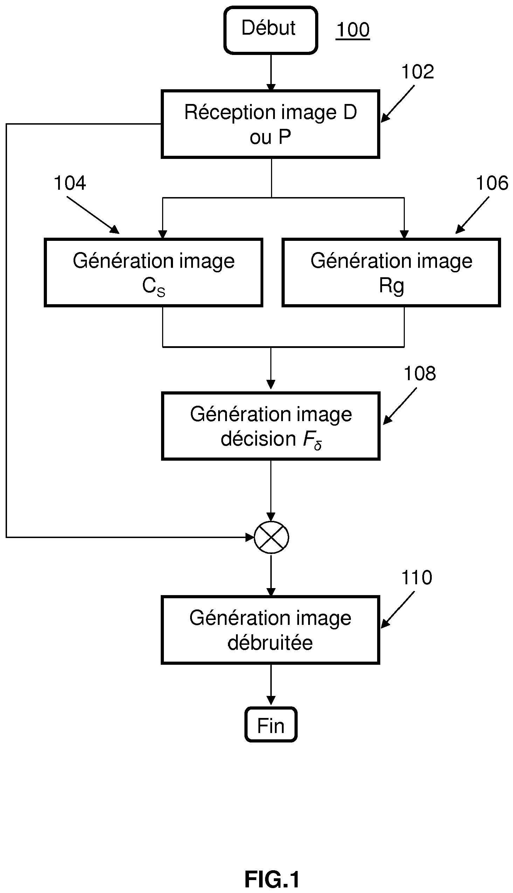

Référence est faite à la figure 1 qui illustre de manière générale les étapes du procédé (100) de l'invention permettant d'obtenir une image débruitée. Le procédé débute quand une image initiale représentant une scène doit être débruitée (102). L'image 3D initiale peut être obtenue selon des techniques de vision stéréoscopiques et de traitement de données 3D, où une scène est représentée par un couple d'images prises sous des angles différents.

Avantageusement, le procédé (100) peut s'appliquer sur une image initiale de disparité D ou de profondeur P.

Il est connu, que pour calculer la disparité d'un point d'une scène, il faut disposer des coordonnées de ses deux projections dans les images gauche et droite. Pour ce faire, des algorithmes d'appariement sont utilisés et visent à trouver, pour un point donné dans une image, son point correspondant dans l'autre image. Une fois les disparités des points de la scène calculées, un nuage de points correspondants de la scène est réalisé.

Il est aussi connu que la disparité 'd' d'un point d'une scène et sa profondeur 'z' par rapport à la caméra sont liées. Ce lien est défini par l'équation (1) suivante :

$$z * d = B * f \qquad [Eq1]$$

'B' qui est connu comme étant la 'baseline' ou distance entre les deux centres optiques des caméras et 'f' qui est la distance focale (la même pour les deux caméras) ayant des valeurs constantes, une variation de disparité 'd' dépend directement d'une variation de la distance 'z' entre un point et les caméras.

Les coordonnées (x, y, z) d'un point d'une scène correspondant à un pixel de coordonnées (u, v) et de disparité 'd' sont alors calculées selon les équations (2,3,4) suivantes:

$$z = B * f/d \qquad [Eq2]$$

$$x = (u-u0) * z/f \qquad [Eq3]$$

$$y = (v-v0) * z/f \qquad [Eq4]$$

où (u0,v0) correspond aux coordonnées de la projection du centre optique dans l'image.

De façon similaire, il existe une relation entre l'aire de la surface apparente d'un objet d'une scène dans l'image et l'aire de la surface réelle de la partie apparente de l'objet. Une grande variation de l'éloignement de l'objet au centre optique de la caméra implique un changement significatif de l'aire de la surface apparente de l'objet dans les images de disparité. Cette constatation s'applique aussi pour les images de profondeur. Aussi, dans le cas d'un dé-bruitage utilisant un filtre de taille fixe comme dans l'art antérieur, par exemple un filtre médian, le changement d'aspect étant trop important, le processus assurera sa fonction de filtre dans une zone limitée de l'image, par contre il échouera sur le reste de l'image.

Aussi, avantageusement, la présente invention propose une nouvelle méthode de filtrage adapté aux données 3D qui utilise un seuillage optimisé. La méthode prend en compte la cohérence spatiale des données et la réalité géométrique des opérations réalisées sur le signal. Pour ce faire, deux nouvelles mesures sont introduites : la cohérence spatiale - Cs - et la réalité géométrique - Rg -.

Dans la suite de la description, les notations suivantes sont adoptées :

- pour les images de profondeur : on désigne R(u,v) un pixel de coordonnées u et v dans l'image de profondeur, et P(u,v) son point 3D associé de coordonnées (x,y,z) ;

- pour les images de disparité : on désigne D(u,v) un pixel de coordonnées u et v dans l'image de disparité, et P(u,v) son point 3D associé de coordonnées (x, y, z) calculées selon les équations (2,3,4).

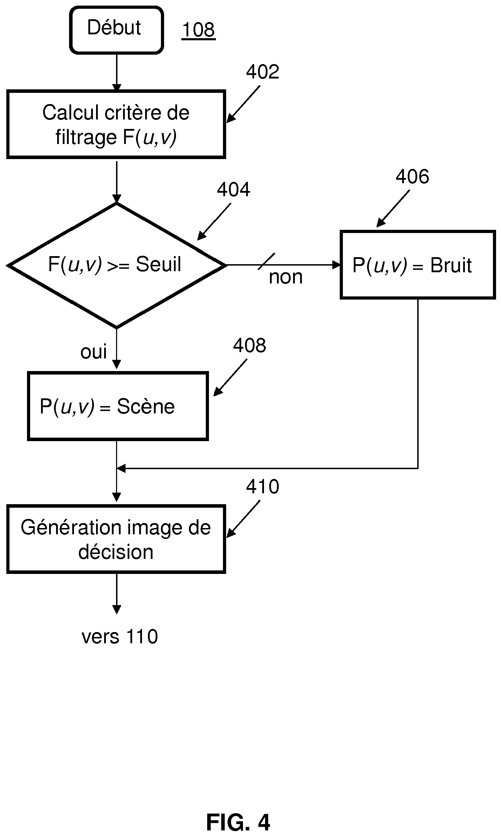

Revenant à la figure 1, après réception de l'image initiale de disparité ou de profondeur, le procédé permet de générer deux nouvelles images à partir de l'image initiale, une première image dite image de cohérence spatiale (104) et une deuxième image dite image de réalité géométrique (106). Puis, le procédé permet de combiner les images de cohérence spatiale et de réalité géométrique pour générer (108) une troisième image, dite image de décision tel qu'il sera détaillé en référence à la figure 4.

Dans une étape suivante, l'image de décision est combinée avec l'image initiale pour générer (110) une image débruitée de la scène analysée.

L'image débruitée peut ensuite être utilisée dans un procédé d'analyse de scène comme la segmentation d'image, la soustraction du fond, la reconnaissance automatique d'objets ou la détection multi-classe. Par exemple, la présente invention combinée à un procédé de segmentation 3D, qui décompose une scène en des objets réel distincts, permet de fournir par exemple une détection d'obstacles localisés. Avantageusement, le procédé de l'invention qui génère une image débruitée de meilleure qualité, permet d'améliorer le temps de calcul d'une opération de segmentation, qui est de l'ordre de la centième (1/100) de seconde.

L'image débruitée peut aussi avantageusement servir pour une simple visualisation de l'image de disparité ou de profondeur, facilitant le confort de lecture et une interprétation aisée par un utilisateur humain.

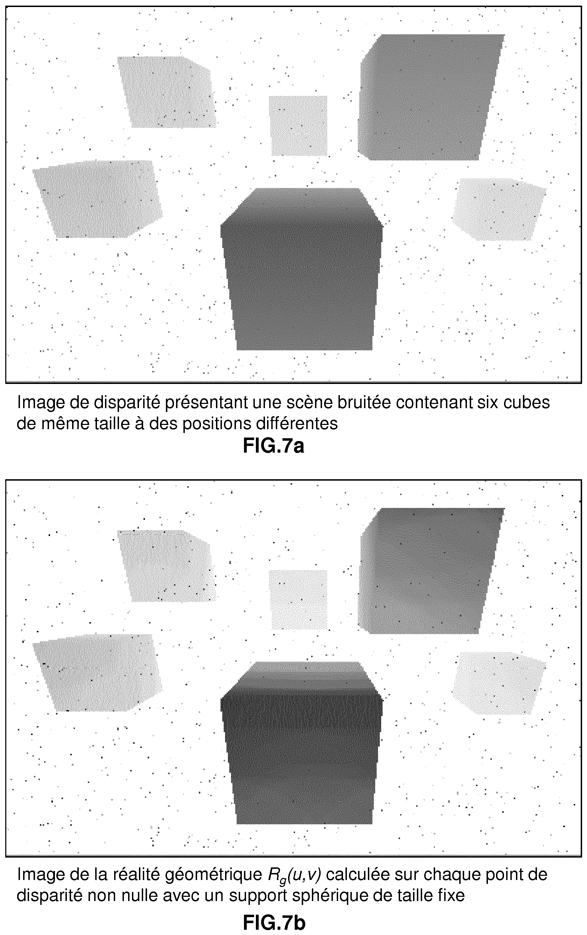

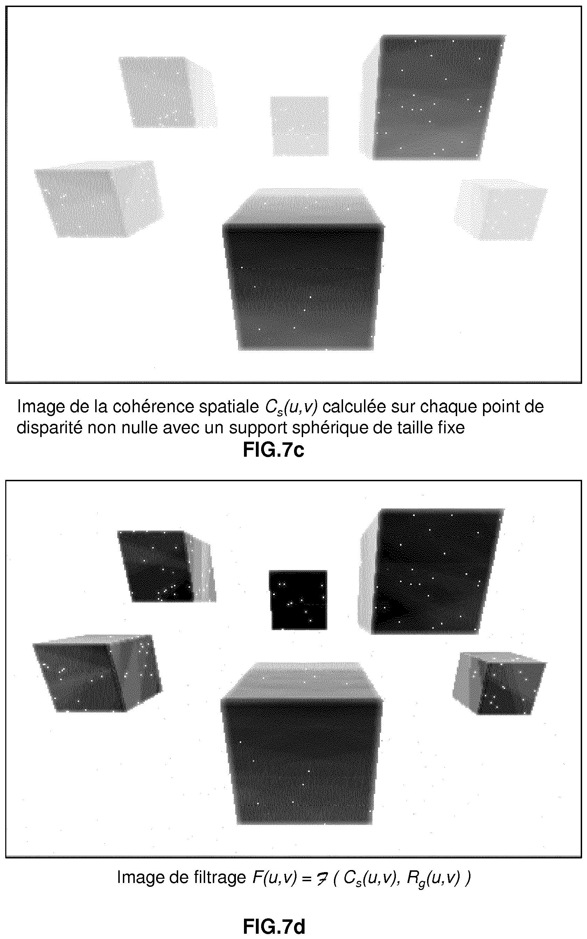

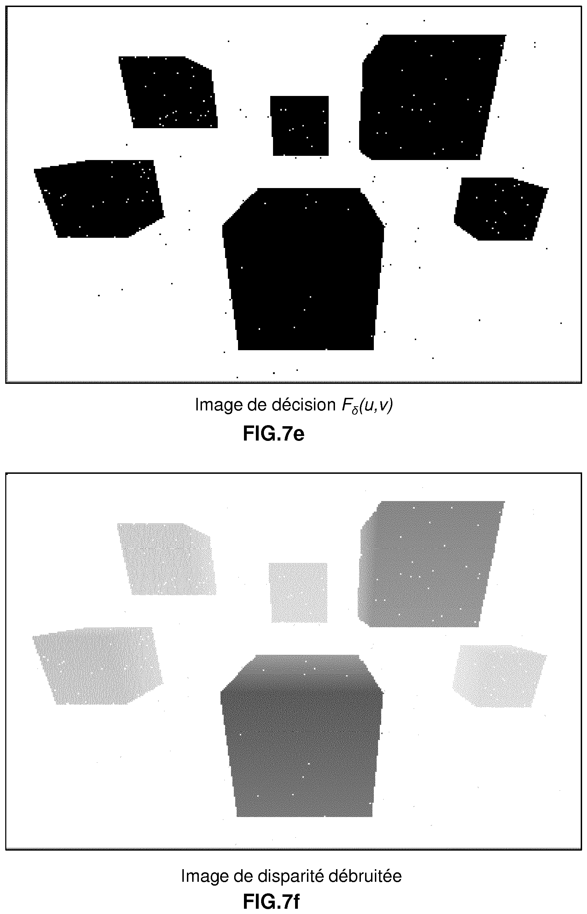

Les figures 7a à 7f illustrent les images obtenues aux différentes étapes du procédé de filtrage de la figure 1 selon un mode de réalisation de l'invention.

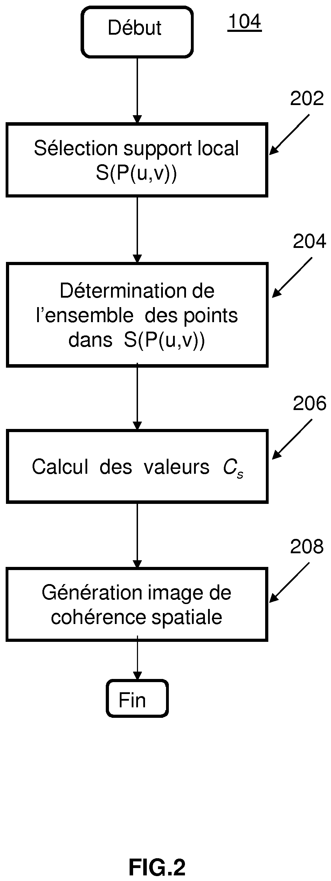

La figure 2 illustre les étapes du procédé (104) de la figure 1, permettant de générer une image de cohérence spatiale dans un mode de réalisation de l'invention. L'image initiale peut être une image de disparité ou dans une variante d'implémentation, être une image de profondeur.

Dans une première étape (202), le procédé permet de sélectionner un support local de volume 3D - S(P(u,v)) - de taille 's' fixe et centré en un point P(u,v). La taille *'s'* est la précision ou granularité volumétrique souhaitée par un utilisateur pour les éléments de la scène à analyser.

Différents types de représentations du support 'S' peuvent être adoptées :

- représentation élémentaire de type : sphère, cube, boîte, cylindre ;

- représentation surfacique de type maillage 3D ;

- représentation voxelique de type voxel; ou

- représentation algébrique telles des surfaces implicites de type *f(x,y,z)=0.*

A l'étape suivante (204), le procédé permet de déterminer l'ensemble des points dont la projection 3D est contenue dans le support local S(P(u,v)) sélectionné.

Une mesure de cohérence spatiale est calculée à l'étape suivante (206) à partir du nombre de points comptabilisés, pour chaque pixel de coordonnées *(u,v),* en profondeur ou en disparité selon le mode d'implémentation. L'homme de l'art appréciera que plus le nombre de points est élevé autour d'un pixel, plus il y a de cohérence spatiale, et a contrario, peu de points autour d'un pixel révèle une faible cohérence spatiale, qui peut indiquer que le pixel représente un bruit.

Ainsi, le critère de cohérence spatiale - $C_s(u,v)$ - est construit comme une fonction $\phi(E)$ basée sur l'ensemble des pixels de l'image réelle initiale dont les points 3D associés appartiennent au support local sélectionné, centré en *P(u,v),* tel que :

$$C_s(u,v) = \phi(E) \, ,$$

où

- $E = \{R(u',v')$ tels que $P(u',v') \in S(P(u,v))\}$ dans le cas d'une image de profondeur ; et

- $E=\{D(u',v')$ tels que $D(u',v') \in S(P(u,v))\}$ dans le cas d'une image de disparité.

Dans un mode de réalisation préférentielle, le critère de cohérence spatiale est défini selon l'équation suivante :

$$C_s(u,v) = \phi(E) = Card\,(\,E\,)\ [Eq5],$$

où

la fonction 'Card' désigne le cardinal, c'est-à-dire la taille de E.

Une fois, les valeurs de cohérence spatiale calculées pour tous les pixels de l'image initiale, le procédé permet de générer (208) une image de cohérence spatiale.

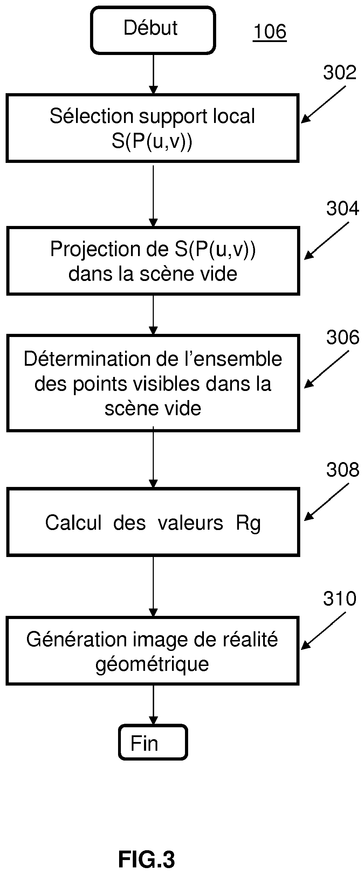

La figure 3 illustre les étapes du procédé (106) de la figure 1 permettant de générer une image de réalité géométrique dans un mode de réalisation de l'invention, à partir de l'image initiale qui peut être une image de disparité ou dans une variante d'implémentation, être une image de profondeur.

Dans une première étape (302), le procédé permet de sélectionner un support local de volume 3D - S(P(u,v)) - de taille 's' fixe et centré en un point P(u,v). Dans un mode de réalisation préférentielle, le support sélectionné pour les procédés (104) et (106) est le même.

Le procédé permet ensuite (304) de projeter pour chaque pixel le support local dans une scène vide. L'étape de projection est réalisée pour toutes les valeurs de disparité ou de profondeur localisées en toute position pixellique (u,v) de l'image 2D, et dans une plage fonctionnelle prédéfinie, avec une granularité fonctionnelle de disparité (ou respectivement de profondeur) définie. Ainsi, les projections correspondent à des réalités géométriques de la transformation « 2D vers 3D ». Elles restent valables tout au long du fonctionnement du système, dès lors que les paramètres optiques restent inchangés (calibration interne de chaque caméra, harmonisation du couple stéréoscopique, hauteur et orientation de la tête stéréo dans son environnement).

L'étape suivante (306) permet de déterminer le nombre de points apparaissant dans le support projeté, c'est-à-dire l'ensemble des points visibles dans la scène vide, pour permettre de calculer à l'étape suivante (310) une mesure de la réalité géométrique - Rg(u,v) - pour chaque pixel de coordonnées *(u,v),* en profondeur ou en disparité selon le mode d'implémentation.

Ainsi, le critère de réalité géométrique - $R_g(u,v)$ - est construit comme une fonction basée sur l'ensemble des pixels allumés, c'est-à-dire ceux qui ont des disparités ou des projections qui sont définies, associés aux points visibles du support local.

Dans un mode de réalisation préférentielle, le critère de réalité géométrique $R_g(u,v)$ est défini comme étant le cardinal de cet ensemble, et correspond à l'aire de la surface apparente du support local *S(P(u,v))* dans l'image de projection du support dans la scène vide.

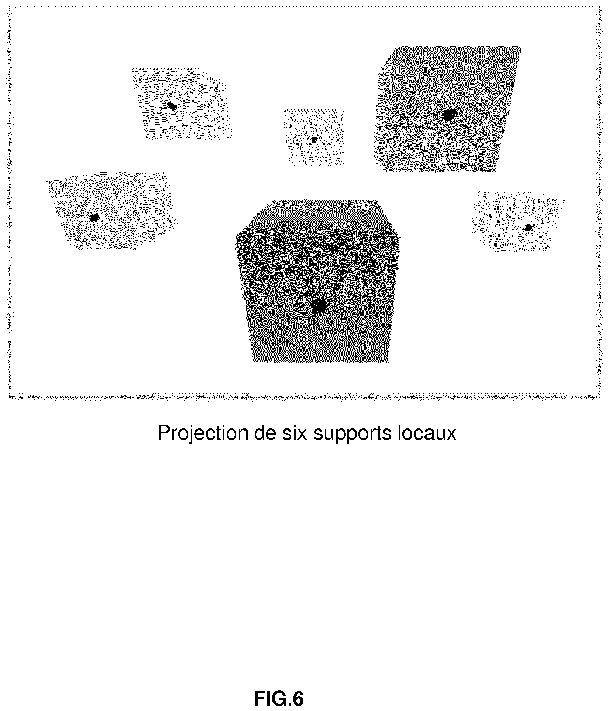

A titre illustratif, la figure 6 montre pour un support de type sphère, six projections pour des points de positions (u, v) et de disparité différentes. L'exemple permet de montrer que l'aire de la surface apparente de chaque support local représente la réalité géométrique du point de coordonnées (u, v) correspondant.

Deux implémentations du critère de réalité géométrique sont possibles:

-   soit, un pré-calcul complet est fait pour toute profondeur ou pour toute disparité et le résultat est stocké. C'est l'implémentation à privilégier pour favoriser un faible temps de calcul d'une chaîne de traitement, au détriment d'un espace mémoire requis ;

-   soit, un calcul est fait à chaque projection. C'est l'implémentation à privilégier si l'on souhaite favoriser un faible encombrement mémoire, au détriment d'un temps de calcul accru.

L'homme du métier appréciera que des variantes d'implémentations soient possibles, telle que par exemple, effectuer un pré-calcul avec compression et stockage de taille réduite. Cette variante nécessite un calcul de décompression pour la relecture des données.

Une fois, la réalité géométrique calculée pour tous les pixels de l'image initiale, le procédé permet de générer (312) une image de réalité géométrique.

La figure 4 illustre les étapes du procédé (108) de la figure 1 permettant de générer une image de décision dans un mode de réalisation de l'invention. Le procédé débute quand les images de cohérence spatiale et de réalité géométrique ont été générées. Dans une première étape (402), le procédé permet de définir un critère de filtrage à partir des deux critères de cohérence spatiale 'Cs' et de réalité géométrique 'Rg'. Le critère de filtrage va permettre de distinguer si un pixel est un point de la scène ou est un point bruit. Le critère de filtrage va être calculé pour chaque pixel de coordonnées *(u,v)* de l'image de profondeur (ou respectivement de disparité).

Le critère de filtrage *F(u,v)* est donné par une fonction '*F*' combinant la cohérence spatiale $C_s(u,v)$ et la réalité géométrique $R_g(u,v)$ du pixel, et est noté :

$$F(u,v) = F \left( C_s(u,v), R_g(u,v) \right)$$

Dans une implémentation, la fonction est choisie comme étant le ratio de $C_s$ et une puissance de $R_g$ selon l'équation suivante :

$$F(u,v) = C_s(u,v) \, / \, ( \, R_g(u,v) \, )^{\alpha} \quad [Eq6]$$

où

le paramètre $\alpha$ est utilisé pour gérer le compromis entre les 2 critères de cohérence spatiale et réalité géométrique. Ainsi, plus $\alpha$ est élevé, plus la réalité géométrique sera privilégiée dans le critère. La spécification de $\alpha$ est paramétrable par l'utilisateur, permettant de l'adapter aux objectifs de l'application.

Par défaut, le cas singulier $\alpha = 1$ est néanmoins intrinsèquement pertinent, et permet de fixer le critère de filtrage F comme un taux de remplissage, fixant le pourcentage de pixels allumés dans une zone cohérente.

Dans une étape suivante (404), le procédé permet de comparer la valeur du critère de filtrage de chaque point (u,v) à une valeur seuil. Si la valeur du critère est inférieure au seuil défini (branche non), le point est classifié comme un point bruit (406). Si la valeur du critère est supérieure au seuil défini (branche oui), le point est classifié comme un point appartenant à la scène (408).

L'étape suivante (410) consiste à générer une image de décision '$F_{\delta}$' à partir de l'ensemble des points classifiés 'scène' ou 'bruit'. L'image de décision est une image binaire qui représente un masque des données initiales (de disparité ou de profondeur), séparant l'ensemble des données estimées correctes où le point est mis à '1' de l'ensemble des données estimées comme du bruit où le point est mis à '0'.

Quand une image de décision est générée, le procédé global (100) permet de générer une image débruitée (étape 110 de la figure 1) par une combinaison de l'image originale (de disparité $D(u,v)$ ou de profondeur $R(u,v)$) et de l'image de décision $F_{\delta}$. La combinaison des deux images est alors dépendante de l'application considérée.

Dans une implémentation particulière, l'image débruitée est définie selon les équations suivantes :

$$D_f(u,v) = D(u,v) \, {}^* F_{\delta}(u,v) \; + \; ( 1 - F_{\delta}(u,v) ) \, {}^* \, \hat{E}_D(u,v)$$

dans le cas d'une image initiale de disparité;

$$R_f(u,v) = R(u,v) \, {}^* F_{\delta}(u,v) \; + \; ( 1 - F_{\delta}(u,v) ) \, {}^* \, \hat{E}_R(u,v)$$

dans le cas d'une image initiale de profondeur,

où

$\hat{E}_D(u,v)$ et $\hat{E}_R(u,v)$ désignent respectivement une estimation locale des données de disparité (D) ou de profondeur (R).

Ainsi avantageusement, le procédé de l'invention permet pour l'image filtrée soit de préserver la valeur d'origine du pixel, soit de la remplacer par une estimation.

Dans une implémentation particulière, la fonction d'estimation prend une valeur fixe telle que :

$$\hat{E}_{D \, ou \, R}(u,v) = K \text{ (valeur fixe).}$$

Cette implémentation est intéressante pour isoler les pixels de l'image (de disparité ou de profondeur) en les affectant à une valeur 'K' spécifiquement identifiable. Un tel cas de figure concerne les applications où l'on préfère ne pas considérer les pixels initialement bruités.

Dans une implémentation typique, K=0 ou $K=2^N-1$ pour un signal résolu sur N bits, afin de ne pas interférer avec la plage des valeurs possibles du pixel.

Si K = 0, les valeurs des pixels en sortie valent :

$$D_f(u,v) = D(u,v) \, {}^* F_{\delta}(u,v)$$

pour une image initiale de disparité ; et

$$R_f(u,v) = R(u,v) \, {}^* F_{\delta}(u,v)$$

pour une image initiale de profondeur.

Dans une variante d'implémentation, la fonction d'estimation $\hat{E}_{D\ ou\ R}$ *(u,v)* peut être une interpolation locale des données *D(u,v)* ou *R(u,v)* présentes (non bruitées) dans un voisinage de (u,v). Une interpolation bilinéaire peut être employée, ou une opération non linéaire de type médian pondéré. Cette approche est pertinente pour obtenir une image filtrée dense et « lisse », par exemple à des fins de visualisation ou de compression, en effet les valeurs atypiques telles qu'un K fixe discriminant étant peu compatibles avec le codage entropique.

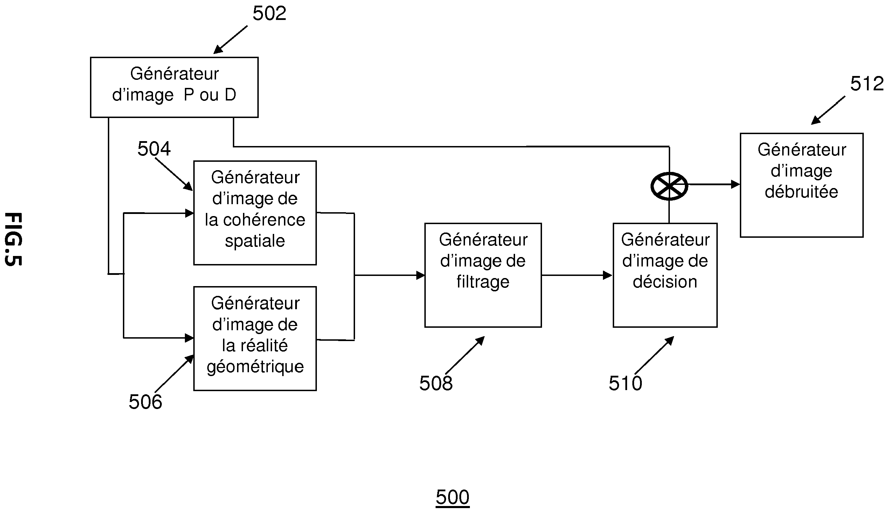

La figure 5 illustre schématiquement les blocs fonctionnels d'une implémentation du dispositif (500) de l'invention pour mettre en oeuvre le procédé de la figure 1. Le dispositif comprend un bloc (502) permettant de produire une image 3D initiale de disparité ou de profondeur d'une scène. Dans une implémentation, la scène est observée à partir d'un capteur stéréoscopique calibré offrant un coût maitrisé, et une image de disparité (représentant l'information 3D) est construite à partir d'une paire d'images rectifiées.

Le bloc (502) est couplé à un premier bloc de génération d'image (504) pour générer une image de la cohérence spatiale et à un second bloc de génération d'image pour générer une image de la réalité géométrique. Les blocs 502 et 504 comprennent des moyens permettant de mettre en oeuvre les étapes décrites en référence aux figures 2 et 3.

La sortie des blocs 502 et 504 est couplée à un troisième bloc de génération d'image (508) pour générer une image de filtrage. La sortie du bloc 508 est couplée à un quatrième bloc de génération d'image (510) pour générer une image de décision. Les blocs 508 et 510 comprennent des moyens permettant de mettre en oeuvre les étapes décrites en référence à la figure 4.

La sortie du bloc 510 est combinée avec la sortie du bloc 502 pour entrer sur un dernier bloc générateur d'image (512) pour générer une image débruitée selon les principes décrits en référence à l'étape 110.

Ainsi le dispositif 500 permet d'appliquer un filtrage sur une image de disparité (ou de profondeur) pour supprimer le bruit d'origine naturelle comme la pluie, l'éblouissement, la poussière, ou le bruit lié aux capteurs ou le bruit lié aux calculs de la disparité.

La présente invention peut être combinée avec un procédé de segmentation 3D de la scène. L'image débruitée (résultante du dispositif 500) est transformée en un nuage de points qui sont par la suite quantifiés dans une grille 3D composée de l x h x p cellules. Pour déconnecter les obstacles entre eux, connectés généralement par le sol, un filtre est appliqué qui permet de supprimer les cellules de la grille contenant des points 3D du sol. Les cellules restantes sont par la suite segmentées spatialement en parties connexes en utilisant une méthode de segmentation connue de l'état de l'art. Par exemple, une méthode consiste à agréger itérativement des cellules par connexité.

La suppression des points représentant le bruit par application du filtre de l'invention a un impact favorable sur les performances de la segmentation 3D. En effet, l'intérêt du filtre pour la segmentation est que les obstacles sont souvent reliés par des points bruits. Dans ce cas, il est difficile de segmenter spatialement les différents obstacles. Par ailleurs, l'intérêt de la quantification est que les obstacles sont souvent partiellement reconstruits sur l'image de disparité. Il est donc difficile à partir du nuage de points résultant de relier les différentes parties d'un même obstacle. Enfin, l'intérêt de la suppression des cellules correspondantes au sol est que les obstacles sont souvent connectés par le sol. Il est donc judicieux de casser ces connexions.

L'homme de l'art comprendra que l'exemple indiqué d'un détecteur d'obstacles 3D n'est qu'un exemple pour une analyse de scène permettant de bénéficier de la fonction de débruitage de l'image de disparité proposée par la présente invention. Néanmoins, l'utilisation du filtrage, tel que proposé dans l'invention, ne saurait se limiter à la recherche d'obstacles par segmentation. Elle concerne tout système temps réel d'analyse de scène à partir d'une image de profondeur bruitée ou d'une image de disparité bruitée.

La présente invention peut s'implémenter à partir d'éléments matériel et logiciel. Les éléments logiciel peuvent être disponibles en tant que produit programme d'ordinateur sur un support lisible par ordinateur, support qui peut être électronique, magnétique, optique ou électromagnétique.

## Revendications

**1.** Un procédé pour filtrer une image 3D initiale dans laquelle chaque pixel de coordonnées (u,v) est associé à un point 3D P(u,v), comprenant les étapes de :

- définir une zone d'analyse locale 3D S(P(u,v)) pour chaque point 3D P(u,v) associé à chaque pixel de coordonnées (u,v) de l'image initiale ;
- générer une image de cohérence spatiale pour l'ensemble des points 3D associés à l'ensemble des pixels de coordonnées (u,v) de l'image 3D initiale, à partir d'une valeur de cohérence spatiale Cs(u,v) mesurée pour chaque point 3D P(u,v), la valeur de cohérence spatiale étant liée à un nombre de points 3D contenus dans la zone d'analyse locale dudit point ;
- générer une image de réalité géométrique pour l'ensemble des points 3D associés à l'ensemble des pixels de coordonnées (u,v) de l'image 3D initiale, à partir d'une valeur de réalité géométrique Rg(u,v) mesurée pour un pixel de coordonnées (u,v) associé à chaque point 3D, la valeur de réalité géométrique étant liée à l'aire de la surface apparent de la zone d'analyse locale S(P(u,v)) dans l'image de sa projection dans une scène vide ;
- générer une image binaire à partir des images de cohérence spatiale et de réalité géométrique où chaque point de l'image binaire est classé en un point de scène ou en un point bruit selon les valeurs de cohérence spatiale et de réalité géométrique obtenues pour ce point ; et
- combiner l'image binaire avec l'image 3D initiale pour obtenir une image débruitée.

2. Le procédé selon la revendication 1 dans lequel l'étape de définir une zone d'analyse locale - S(P(u,v)) - consiste à définir un volume 3D de taille fixe, centré sur les coordonnées P(u, v) d'un point 3D associé à un pixel.

3. Le procédé selon la revendication 1 ou 2 dans lequel l'étape de mesurer une valeur de cohérence spatiale - $C_s(u,v)$ - pour un point 3D, comprend les étapes de :

- déterminer l'ensemble des pixels de l'image initiale dont les points 3D associés sont contenus dans la zone d'analyse locale pour ledit point 3D ; et
- définir une valeur de cohérence spatiale pour ledit point 3D en fonction du résultat.

4. Le procédé selon l'une quelconque des revendications 1 à 3 dans lequel l'étape de mesurer une valeur de réalité géométrique - $R_g(u,v)$ - pour un pixel associé à un point 3D, comprend les étapes de :

- projeter la zone d'analyse locale dans une scène vide ;
- déterminer l'ensemble des points 3D visibles dans la zone d'analyse locale dans l'image de sa projection dans la scène vide ; et
- définir une valeur de réalité géométrique pour ledit pixel en fonction du résultat.

5. Le procédé selon l'une quelconque des revendications 1 à 4 dans lequel l'étape de générer une image binaire, comprend les étapes de :

- générer pour chaque point 3D une valeur de filtrage à partir des valeurs de cohérence spatiale et de réalité géométrique ;
- comparer la valeur de filtrage obtenue à une valeur seuil ;
- classer le point 3D en un point de scène ou en un point bruit selon le résultat de la comparaison ; et
- générer une image de l'ensemble des points de scène et de bruit.

6. Le procédé selon l'une quelconque des revendications 1 à 5 dans lequel l'image initiale est une image de disparité.

7. Le procédé selon l'une quelconque des revendications 1 à 5 dans lequel l'image initiale est une image de profondeur.

8. Le procédé selon l'une quelconque des revendications 1 à 7 dans lequel la zone d'analyse locale est choisie dans un groupe comprenant des représentations de type sphère, cube, boîte, cylindre ou des représentations surfacique de type maillage 3D ou des représentations voxeliques de type voxel ou des représentations algébriques.

9. Le procédé selon l'une quelconque des revendications 1 à 8 dans lequel la valeur de réalité géométrique est précalculée.

10. Un dispositif pour filtrer une image initiale, le dispositif comprenant des moyens pour mettre en oeuvre les étapes du procédé selon l'une quelconque des revendications 1 à 9.

11. Un produit programme d'ordinateur, ledit programme d'ordinateur comprenant des instructions de code permettant d'effectuer les étapes du procédé selon l'une quelconque des revendications 1 à 9, lorsque ledit programme est exécuté sur un ordinateur.

**Patentansprüche**

1. Verfahren zum Filtern eines anfänglichen 3D-Bildes, bei welchem jeder Pixel mit Koordinaten (u,v) mit einem 3D-Punkt P(u,v) assoziiert ist, Folgende Schritte beinhaltend:

- Definieren einer lokalen 3D-Analysezone S(P(u,v)) für jeden 3D-Punkt P(u,v), assoziiert mit jedem Pixel mit Koordinaten (u,v) des anfänglichen Bildes;
- Erzeugen eines räumlichen Kohärenzbildes für sämtliche 3D-Punkte, die mit sämtlichen Pixeln mit Koordinaten (u,v) des anfänglichen 3D-Bildes assoziiert sind, anhand eines räumlichen Kohärenzwertes $C_S(u,v)$, welcher für jeden 3D-Punkt P(u,v) gemessen wird, wobei der räumliche Kohärenzwert mit einer Anzahl von 3D-Punkten verbunden ist, welche in der lokalen Analysezone des Punktes enthalten sind;
- Erzeugen eines geometrischen Realitätsbildes für sämtliche 3D-Punkte, welche mit sämtlichen Pixeln mit Koordinaten (u,v) des anfänglichen 3D-Bildes assoziiert sind, anhand eines geometrischen Realitätswertes Rg(u,v), welcher für einen mit einem jeden 3D-Punkt assoziierten Pixel mit Koordinaten (u,v) gemessen wird, wobei der geometrische Realitätswert mit dem Flächeninhalt der scheinbaren Fläche der lokalen Analysezone S(P(u,v)) im Bild ihrer Projektion in eine leere Szene verbunden ist;
- Erzeugen eines binären Bildes anhand des räumlichen Kohärenzbildes und des geometrischen Realitätsbildes, wobei jeder Punkt des binären Bildes als ein Szenenpunkt oder als ein Rauschenpunkt klassifiziert wird, je nach den Werten der räumlichen Kohärenz und der geometrischen Realität, die für diesen Punkt erzielt wurden; und
- Kombinieren des binären Bildes mit dem anfänglichen 3D-Bild zum Erzielen eines rauschbereinigten Bildes.

2. Verfahren nach Anspruch 1, bei welchem der Schritt der Definition einer lokalen Analysezone - S(P(u,v)) - darin besteht, ein 3D-Volumen fester Größe zu definieren, zentriert auf die Koordinaten P(u, v) eines mit einem Pixel assoziierten 3D-Punktes.

3. Verfahren nach Anspruch 1 oder 2, bei welchem der Schritt des Messens eines räumlichen Kohärenzwertes - $C_S(u,v)$ - für einen 3D-Punkt folgende Schritte beinhaltet:

   - Festlegen sämtlicher Pixel des anfänglichen Bildes, deren assoziierte 3D-Punkte in der lokalen Analysezone für den 3D-Punkt enthalten sind; und
   - Definieren eines räumlichen Kohärenzwertes für den 3D-Punkt je nach dem Ergebnis.

4. Verfahren nach einem der Ansprüche 1 bis 3, bei welchem der Schritt des Messens eines geometrischen Realitätswertes - $R_g(u,v)$ - für einen mit einem 3D-Punkt assoziierten Pixel folgende Schritte beinhaltet:

   - Projizieren der lokalen Analysezone in eine leere Szene;
   - Ermitteln sämtlicher in der lokalen Analysezone im Bild ihrer Projektion in der leeren Szene sichtbaren 3D-Punkte; und
   - Definieren eines geometrischen Realitätswertes für den Pixel je nach dem Ergebnis.

5. Verfahren nach einem der Ansprüche 1 bis 4, bei welchem der Schritt des Erzeugens eines binären Bildes, folgende Schritte beinhaltet:

   - Erzeugen, für jeden 3D-Punkt, eines Filterungswertes anhand des räumlichen Kohärenzwertes und des geometrischen Realitätswertes;
   - Vergleichen des erzielten Filterungswertes mit einem Schwellenwert;
   - Klassifizieren des 3D-Punktes als einen Szenenpunkt oder einen Rauschenpunkt je nach Ergebnis des Vergleichs; und
   - Erzeugen eines Bildes sämtlicher Szenen- und Rauschenpunkte.

6. Verfahren nach einem der Ansprüche 1 bis 5, bei welchem das anfängliche Bild ein Disparitätsbild ist.

7. Verfahren nach einem der Ansprüche 1 bis 5, bei welchem das anfängliche Bild ein Tiefenbild ist.

8. Verfahren nach einem der Ansprüche 1 bis 7, bei welchem die lokale Analysezone aus einer Gruppe gewählt wird, beinhaltend Darstellungen vom Typ Kugel, Würfel, Box, Zylinder oder Flächendarstellungen vom Typ 3D-Raster oder Voxeldarstellungen vom Typ Voxel oder algebraische Darstellungen.

9. Verfahren nach einem der Ansprüche 1 bis 8, bei welchem der geometrische Realitätswert im Voraus berechnet ist.

10. Vorrichtung zum Filtern eines anfänglichen Bildes, wobei die Vorrichtung Mittel zum Umsetzen der Schritte des Verfahrens nach einem der Ansprüche 1 bis 9 beinhaltet.

11. Computerprogrammprodukt, wobei das Computerprogramm Code-Befehle beinhaltet, welche es ermöglichen, die Schritte des Verfahrens nach einem der Ansprüche 1 bis 9 durchzuführen, wenn das Programm auf einem Computer ausgeführt wird.

**Claims**

1. A method for filtering an initial 3D image, in which each pixel of coordinates (u, v) is associated with a 3D point P(u, v), comprising the following steps:

   - defining a local 3D analysis zone S(P(u, v)) for each 3D point P(u, v) that is associated with each pixel of coordinates (u, v) of the initial image;
   - generating a spatial coherence image for the set of 3D points associated with the set of pixels of coordinates (u, v) of the initial 3D image, on the basis of a spatial coherence value Cs(u, v) measured for each 3D point P(u, v), the spatial coherence value being associated with a number of 3D points contained in the local analysis zone of said point;
   - generating a geometrical reality image for the set of 3D points associated with the set of pixels of coordinates (u, v) of the initial 3D image, on the basis of a geometrical reality value Rg(u, v) measured for a pixel of coordinates (u, v) associated with each 3D point, the geometrical reality value being associated with the area of the apparent surface of the local 3D analysis zone S(P(u, v)) in the image of its projection into an empty scene;
   - generating a binary image on the basis of spatial coherence and geometrical reality images, where each point of the binary image is classed as a scene point or as a noise point according to the spatial coherence and geometrical reality values obtained for this point; and
   - combining the binary image with the initial 3D image in order to obtain a denoised image.

2. The method as claimed in claim 1, wherein the step of defining a local analysis zone S(P(u,v)) comprises defining a fixed size 3D volume, centred on the coordinates P(u, v) of a 3D point associated with a pixel.

3. The method as claimed in claim 1 or 2, wherein the step of measuring a spatial coherence value $C_s(u,v)$ for a 3D point comprises the following steps:

   - determining the set of pixels of the initial image, the associated 3D points of which are contained in the local analysis zone for said 3D point; and
   - defining a spatial coherence value for said 3D point as a function of the result.

4. The method as claimed in any one of claims 1 to 3, wherein the step of measuring a geometrical reality value $R_g(u,v)$ for a pixel associated with a 3D point comprises the following steps:

   - projecting the local analysis zone into an empty scene;
   - determining the set of 3D points visible in the local analysis zone in the image of its projection into the empty scene; and
   - defining a geometrical reality value for said pixel as a function of the result.

5. The method as claimed in any one of claims 1 to 4, wherein the step of generating a binary image comprises the following steps:

   - generating, for each 3D point, a filtering value on the basis of the spatial coherence and geometrical reality values;
   - comparing the obtained filtering value with a threshold value;
   - classing the 3D point as a scene point or as a noise point depending on the result of the comparison; and
   - generating an image of the set of scene and noise points.

6. The method as claimed in any one of claims 1 to 5, wherein the initial image is a disparity image.

7. The method as claimed in any one of claims 1 to 5, wherein the initial image is a depth image.

8. The method as claimed in any one of claims 1 to 7, wherein the local analysis zone is selected from a group comprising representations of the sphere, cube, box, cylinder type or surface representations of the 3D mesh type or voxelic representations of the voxel type or algebraic representations.

9. The method as claimed in any one of claims 1 to 8, wherein the geometrical reality value is pre-computed.

10. A device for filtering an initial image, the device comprising means for implementing the steps of the method as claimed in any one of claims 1 to 9.

11. A computer program product, said computer program comprising code instructions allowing the steps of the method as claimed in any one of claims 1 to 9 to be carried out when said program is executed on a computer.

Début  _100_

Réception image D
ou P  102

Génération image
C_S  104

Génération image
Rg  106

Génération image
décision $F_\delta$  108

⊗

Génération image
débruitée  110

Fin

**FIG.1**

```
        ┌──────────┐
        │  Début   │     104
        └────┬─────┘
             │
             ▼
   ┌────────────────────┐
   │ Sélection support local │     202
   │      S(P(u,v))     │
   └─────────┬──────────┘
             │
             ▼
   ┌────────────────────┐
   │   Détermination de │
   │ l'ensemble des points │     204
   │   dans  S(P(u,v))  │
   └─────────┬──────────┘
             │
             ▼
   ┌────────────────────┐
   │ Calcul des valeurs $C_s$ │     206
   └─────────┬──────────┘
             │
             ▼
   ┌────────────────────┐
   │  Génération image de │
   │  cohérence spatiale  │     208
   └─────────┬──────────┘
             │
             ▼
        ┌──────────┐
        │   Fin    │
        └──────────┘
```

**FIG.2**

Début    <u>106</u>

302

Sélection support local
S(P(u,v))

304

Projection de S(P(u,v))
dans la scène vide

306

Détermination de l'ensemble
des points visibles dans la
scène vide

308

Calcul des valeurs Rg

310

Génération image de réalité
géométrique

Fin

**FIG.3**

Début  108

Calcul critère de
filtrage F(*u,v*)  402

F(*u,v*) >= Seuil  404

non → P(*u,v*) = Bruit  406

oui

P(*u,v*) = Scène  408

Génération image de
décision  410

vers 110

**FIG. 4**

FIG.5

Projection de six supports locaux

FIG.6

Image de disparité présentant une scène bruitée contenant six cubes de même taille à des positions différentes

**FIG.7a**

Image de la réalité géométrique $R_g(u,v)$ calculée sur chaque point de disparité non nulle avec un support sphérique de taille fixe

**FIG.7b**

Image de la cohérence spatiale $C_s(u,v)$ calculée sur chaque point de
disparité non nulle avec un support sphérique de taille fixe

**FIG.7c**

Image de filtrage $F(u,v) = \mathcal{F}\left(\, C_s(u,v),\, R_g(u,v)\, \right)$

**FIG.7d**

Image de décision $F_\delta(u,v)$

**FIG.7e**

Image de disparité débruitée

**FIG.7f**

**EP 3 221 841 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2541496 A2
- WO 2013079602 A1
- US 20120263353 A

### Littérature non-brevet citée dans la description

- Rapid 3D object detection and modeling using range data from range imaging camera for heavy equipment opération. **SON, KIM ; CHOI.** Automation in Construction. Elsevier, 2010, vol. 19, 898-906